# EUROPEAN PATENT APPLICATION

(11) **EP 2 161 152 A1**
(43) Date of publication of application: **10.03.2010**
(21) Application number: 08425587.6
(22) Date of filing: 03.09.2008
(51) Int. Cl.: B60J 7/06

(54) **Driving system for packing and/or unpacking a canvas**

(71) Applicant: Marcolin S.r.l., 33170 Pordenone (IT)
(72) Inventor: Amato, Davide, 33080 Fiume Veneto, Pordenone (IT)
(74) Representative: Feltrinelli, Secondo Andrea

(57) **Abstract**

There is described a driving system (AZ) for moving the covering canvas (CV) of a top- body (CS) between a first and a second configuration, the canvas being sustained by centerings (C) sliding on the edge (B) of the top-body. To move the centerings and the canvas, the system comprises a fluid in pressure operatively interacting with one or more centerings (C) and/or the canvas (CV) so that the fluid exerts on the one or more centerings and/or the canvas a force such as to spread them out and/or to pack them.

## Description

The invention refers to a driving system to pack and/or spread out the covering canvas of a top-body, preferably of heavy vehicles.

On the top-bodies of vehicles a bellow-foldable covering canvas is commonly mounted, distributed on and supported by centerings able to slide on the edge of the top-body.

The centerings are moved by two cable rings, arranged on the two sides of the top-body, tensioned between four pulleys, two of which - one by side - are connected by a shaft and set in rotation by an electric motor. The feet of the head centering are respectively fixed to a segment of cable belonging to each ring; the other centerings only slide above the cables and use them as a guide. When the motor is active it sets in motion the cable rings with equiverse directions and they draw back and forth the centerings, pushed or drawn by the head centering; e.g. see EP 1 093 949.

A problem of the system is surely its complexity. The cable rings, the transmission pulleys, the motor and relative gearmotor, and the control unit are very expensive and they ask for a lot of hours of specialized manpower for the assemblage on the top-body.

Object of the invention is to carry out a driving system very simple to produce, and easily mountable on a top-body.

Such an object is achieved by a driving system for moving the covering canvas of a top-body from a first to a second configuration, the canvas being sustained by centering able to slide on the edge of the top-body, comprising a fluid in pressure operatively interacting with one or more centerings and/or the canvas so that the fluid exerts on the one or more centerings and/or the canvas a force such as to spread them out and/or to pack them.

It is apparent how every problem stemming from the cable rings is eliminated. To move the canvas from the packed configuration to the unfolded one or viceversa two distinct fluid circuits/systems can be used, the first destined to one variation of configuration, the other to the inverse one. Clearly, by means of the fluid, a force may be exerted on one or more centerings, on the canvas or both.

The system may comprise a high-pressure source of fluid and a network of ducts adapted to carry the fluid in pressure from the source towards one or more thrust surfaces on which the pressure thereof is discharged, thereby exerting a thrust/traction on the canvas and/or one or more centerings.
Such surfaces advantageously are formed as one or more chambers operatively connected to the canvas and/or to one or more centerings, the chambers being adapted to get deformed by the action of the fluid in pressure, such deformation causing the spreading out of the whole canvas or part of it.

Advantageously the one or more chambers may be integrally formed in the canvas, e.g. by means of folding the canvas itself, or may be inflatable/deflatable sleeves applied to it and/or to the centerings. Preferably the chambers in the canvas are formed in correspondence of a side edge thereof, as one or more longitudinal, hermetic pockets, preferably having an extension substantially equal to the length thereof, that are inflatable by the fluid. This allows the rapid, one-shot unfolding of the canvas. If the chambers are isolated among each other the canvas may be spread out section by section (that relative to the chamber which has been inflated).

In order to assure a practically unlimited autonomy, the system comprises a stocking reservoir for the fluid and a duct to draw the fluid from the reservoir. Preferably said fluid is compressed air, advantageously taken from the stocking reservoir commonly present on lorries or heavy vehicles, but it may be a liquid as well.

The system may comprise means for bringing the canvas back in the first starting configuration, adapted to exploit said fluid to produce a mechanical power of thrust/traction on one or more centerings and/or the canvas. If, for instance, the fluid is only used to inflate the chambers or pockets for spreading out the canvas, the question of being able to pack it again should be considered. Exploiting again the fluid in pressure simplifies the system, and limit costs. A possibility is that the means for bringing back the canvas comprise a revolving member, on which a rope winds and (the rope) is connected to a centering to pull it. The revolving member may be operated by a turbine or motor means which are set in motion through the pressure of the fluid.

Another solution, to be combined with the precedent or not, includes elastic means loaded during the displacement of the canvas obtained through said fluid, so that the elastic means by elastically recovering their starting configuration also restore the first starting configuration of the canvas. The elastic means may constitute alone, or assist, the means for bringing back the canvas, saving costs and simplifying the system. For example, the elastic means may be embodied by a flexible lamina associated to the canvas.

Preferably, the system comprises flow switching means for selectively diverting the flow of said fluid towards one or more chambers or towards the means for bringing back the canvas. This allows the two-fold exploitation of the fluid for the two displacement subsystems of the canvas.

The invention also presents a method for moving the covering canvas of a top-body from a first to a second configuration, the canvas being sustained by centerings sliding on the edge of the top-body, wherein a fluid in pressure is used to exert such a thrust on one or more centerings and/or the canvas so as to spread it out and/or to pack it.

The invention and its advantages will be even more clearer from the following description of a preferred embodiment, together with the attached drawings in which
figure 1 shows schematically a driving system according to the invention;
figure 2 shows a cross-section view taken along the plane II-II in fig. 1.

A driving system AZ according to the invention acts on a plurality (an indefinite number) of centerings C that sustain a canvas CV and that can slide on the edge B of a top-body CS through known skids PT that receive the foot thereof (the centerings C and the skids PT are drawn in broken lines because underlying the canvas CV). The centering CF is fixed, while the others are movable on the top-body CS.

On two sides of the top-body CS arrive respectively two ducts T1, T2 that draw compressed air from the first output of a switch D, fed at the input by a duct T0 carrying the compressed air stored in a reservoir S (or also taken from a compressor motor M) after the air has gone through a flow regulator R.

The switch D has as second output a duct T3 that feeds a turbine TP on whose output shaft there is keyed a collecting winch (or pulley) ML with the function to wind a cable W fixed to the head centering CH among those supporting the canvas CV.

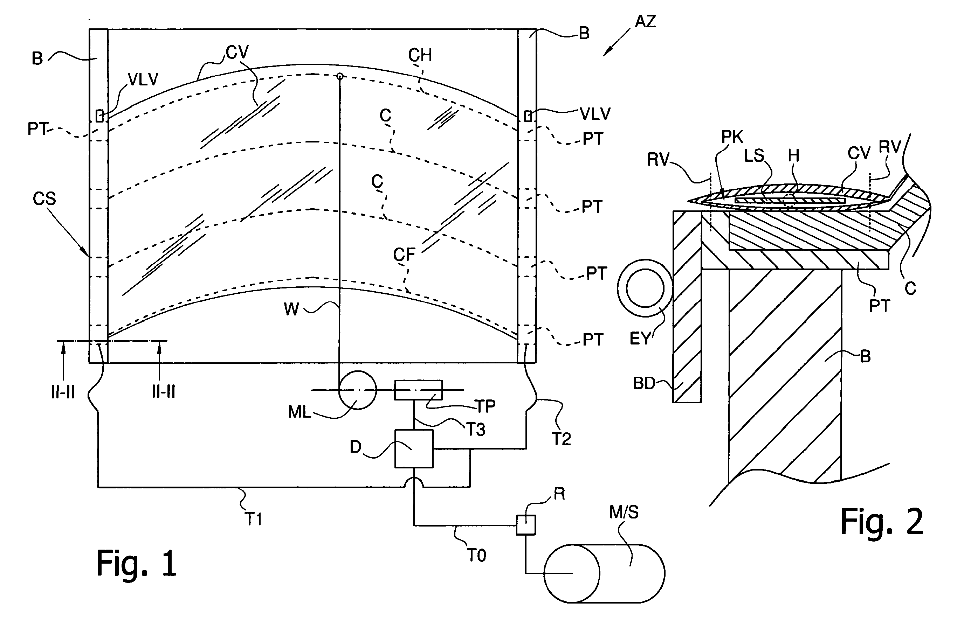

The canvas CV is arranged, as already said, over the centerings C (see fig. 2) and every side edge thereof is folded towards the inside and welded at the free end on itself, so as to form a pocket or inner tubular sack PK that extends for the whole length of the canvas CV, a pocket PK for every side. The edges of the pocket PK are fixed with rivets RV on the skid PT of every centering (thus fixing the canvas CV thereto) with the adroitness that the pocket PK remains hermetically closed. The pocket PK also has the short sides hermetically welded, and in them there are provided two openings: a mouth H (drawn in broken lines) next to the fixed centering CF and another opening for connecting thereto a calibrated bleed-valve VLV.

Inside the pocket PK it is advantageous to insert a similarly long plastic band, with the purpose of holding well separated the walls of the pocket PK, of keeping the segments of the canvas CV tensioned when it folds up and, thanks to the elasticity of the band LS, of favoring the unfolding of the canvas CV. In practice, the band LS can work as a lamina-spring.

The ducts T1, T2 respectively connect hermetically to the mouths H of the two pockets PK, in order to inflate inside them the compressed air.
The operation of the driving system is the following.

With the canvas CV packed, the switch D is regulated to direct the compressed air in the ducts T1 T2. The flow regulator R acts to stabilize the air pressure (e.g. at 5bar) that goes out from the reservoir S or that is produced by the motor M. In the commercial trucks, in fact, the reservoir S has a pressure of about 8bar, that is too high and would risk to damage the pockets PK.

When the air arrives in the pockets PK, it swells and stretches them, making them assume a lengthened tubular form, with the consequence that (nearly as in a Menelik tongue) the whole canvas CV unfolds and the centerings C move away from the fixed one CF.

The band LS, that is elastically folded where the canvas is closed, is able to assist and servo the spreading out of the canvas CV. When the pocket PK is all inflated and therefore the canvas CV is completely spread out, the valves VLV release the compressed air continuing to enter from the mouth H, thereby avoiding the explosion of the same pocket PK until the air flow is interrupted (manually or by a simple electronic control, e.g. timed or not). Preferably to the skid PT there is associated an eyelet EY welded on a vertical plate BD. In the eyelet EY there is inserted a rope taut on the top-body CV, with the only purpose of avoiding the lifting of the canvas CV.

To withdraw the canvas CV in packed position various systems may be used. For example the band LS could be replaced by a preloaded lamina-spring, that is short in rest condition and forced to lengthen by the compressed air. The return strength of the spring can bring the canvas CV back in packed condition (in order to avoid continually injecting air in the pockets PK, means for blocking the spread canvas may per provided, by stopping the centering CH in position of maximum extension on the edge B).

Another method is shown in fig. 1. The switch D is acted upon to divert the air flow through the duct T3 to the turbine TP, which operates the winch ML for rewinding the cable W and withdrawing the centering CH with the whole canvas CV.

It is to be noted that the complicated cable rings of the known art are not used, an electric motor and relative control unit either. Everything exploits the pressure of the fluid, that is compressed in real time or pre-compressed and stored.

## Claims

1. Driving System (AZ) for moving the covering canvas (CV) of a top-body (CS) from a first to a second configuration, the canvas being sustained by centerings (C) able to slide on the edge (B) of the top-body, **characterized by** comprising a fluid in pressure operatively interacting with one or more centerings (C) and/or the canvas (CV) so that the fluid exerts on the one or more centerings and/or the canvas a force such as to spread them out and/or to pack them.

2. Driving System (AZ) according to Claim 1, comprising a high-pressure source of fluid (M/S) and a network of ducts (T0, T1, T2) adapted to carry the fluid in pressure from the source toward one or more thrust surfaces (PK) on which the pressure thereof is discharged, thereby exerting a thrust/traction on the canvas and/or one or more centerings.

3. Driving System (AZ) according to Claim 2, wherein said one or more surfaces belong to one or more chambers (PK) operatively connected to the canvas and/or to one or more centerings.

4. Driving System (AZ) according to Claim 3, wherein the chambers (PK) are adapted to get deformed by the action of the fluid in pressure, such deformation causing the spreading out of the whole canvas or part of it.

5. Driving System (AZ) according to Claim 4, wherein the one or more chambers (PK) are integrally formed in the canvas.

6. Driving System (AZ) according to Claim 5, wherein the canvas in correspondence of a side edge thereof comprises one or more longitudinal, hermetic pockets (PK) that are inflatable by the fluid and have extension substantially equal to the length of the canvas.

7. Driving System (AZ) according to any of the preceding Claims, comprising a stocking reservoir for the fluid (M/S) and a duct (T0) to draw the fluid from the reservoir.

8. Driving System (AZ) according to any of the preceding Claims, comprising means (TP, ML, W) for bringing the canvas back in the first starting configuration, the means for bringing back the canvas being adapted to exploit said fluid to produce a mechanical power of thrust/traction on the one or more centerings and/or the canvas.

9. Driving System (AZ) according to Claim 8, wherein the means for bringing back the canvas comprise a revolving member (ML) on which a rope (W) winds and is connected to a centering (CH) to pull it.

10. Driving System (AZ) according to Claim 9, wherein said revolving member (W) is operated by a turbine or motor means (TP) set in motion through the pressure of the fluid.

11. Driving System (AZ) according to any of Claims 8 to 10, wherein said means for bringing back the canvas comprise elastic means (LS) loaded during the displacement of the canvas obtained through said fluid, so that the elastic means by elastically recovering their starting configuration also restore the first starting configuration of the canvas.

12. Driving System (AZ) according to Claim 11, wherein said elastic means comprise a flexible lamina (LS) associated to the canvas.

13. Driving System (AZ) according to Claim 3 and any of the Claims 8 to 12, comprising flow switching means (D) for selectively diverting the flow of said fluid towards the one or more chambers or towards the means for bringing back the canvas.

14. Method for moving the covering canvas (CS) a top-body from a first to a second configuration, the canvas being sustained by centerings (C) able to slide on the edge (B) of the top-body, **characterized by** using a fluid in pressure to exert such a thrust on one or more centerings and/or the canvas so as to spread it out and/or to pack it.

15. Method or driving System (AZ) according to any of the preceding Claims, wherein said fluid is compressed air.
